(19) Europäisches Patentamt
European Patent Office
Office européen des brevets

(11) **EP 4 411 439 A1**

(12) # EUROPEAN PATENT APPLICATION

(43) Date of publication:
**07.08.2024 Bulletin 2024/32**

(21) Application number: **24155954.1**

(22) Date of filing: **06.02.2024**

(51) International Patent Classification (IPC):
**G02B 6/293** (2006.01) **G02B 6/32** (2006.01)

(52) Cooperative Patent Classification (CPC):
**G02B 6/32; G02B 6/29365; G02B 6/2938**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2023 US 202318164718**

(71) Applicant: **Corning Research & Development Corporation**
**Corning, New York 14831 (US)**

(72) Inventor: **SPREEMANN, Martin**
**13189 Berlin (DE)**

(74) Representative: **Elkington and Fife LLP**
**Prospect House**
**8 Pembroke Road**
**Sevenoaks, Kent TN13 1XR (GB)**

(54) **OPTICAL FIBER MODE FIELD ADAPTER**

(57) Mode field adapters and methods of making mode field adapters that include a plurality of ports each having a collimating lens. At least one port is configured to receive a hollow core optical fiber and has a collimating lens with characteristics optimized for hollow core optical fibers. One or more other ports are configured to receive solid core optical fibers and have collimating lenses with characteristics optimized for solid-core fibers. The focal lengths of the lenes are selected so that the ratio of focal lengths between collimating lenses for hollow core and solid core optical fibers is the substantially the same as the ratio between the mode field diameters of the hollow core and solid core optical fibers. Mode field adapters may include one or more bandpass filters configured to selectively couple portions of an optical beam between a common port and different channel ports of the mode field adapter.

**FIG. 1**

EP 4 411 439 A1

**Description**

**Cross-Reference to Related Applications**

This application claims the benefit of priority of U.S. Application Serial No. 18/164,718 filed on February 6, 2023, the content of which is relied upon and incorporated herein by reference in its entirety.

**Technical Field**

This disclosure relates generally to optical connectivity, and more particularly to devices and methods for operatively coupling optical fibers having different mode field diameters.

**Background**

Optical fibers are useful in a wide variety of applications, including the telecommunications industry for voice, video, and data transmissions. Benefits of optical fibers include wide bandwidth and low noise operation. The most common type of optical fiber includes a higher refractive index region (referred to as a "core") that is surrounded by a lower refractive index region (referred to as "cladding"). This solid core and the adjacent cladding define an optical waveguide which guides light along the length of the optical fiber. In contrast, hollow core optical fibers, which have a core that largely comprises air or a vacuum, have a core with a lower refractive index than the cladding. Hollow core optical fibers have attracted interest recently due to certain performance advantages they provide over solid core optical fibers. These advantages include lower nonlinearity, Rayleigh scattering, and latency than solid core optical fibers.

The performance advantages of hollow core optical fibers have the potential to provide significant advantages in a variety of applications. By way of example, the lower latency of hollow core optical fibers could provide significant advantages in 5G fronthaul networks. The distance over which optical fibers can provide 5G fronthauling is limited by the maximum round trip transmission delay which can be tolerated by the baseband unit to remote radio head connection. This maximum delay is about 250 $\mu$s in current 5G systems. Because light propagates through solid core optical fibers at a speed of about 200,000 km/sec, solid core optical fibers are limited to a maximum distance of about 24.6 km for 5G fronthaul applications.

In contrast, due to the lower refractive index of air as compared to glass, hollow core fibers provide transmission speeds about 50% higher than solid core optical fibers. Thus, hollow core optical fibers may allow a maximum distance between baseband units and remote radio heads to be increased to about 36.9 km. This increase would allow a baseband unit to support a coverage area about 225% larger than the area that could be covered by a fronthaul network using solid core optical fibers.

However, hollow core optical fibers have certain drawbacks that have limited their use. For example, hollow core optical fibers typically have a relatively large core as compared to solid core optical fibers. This results in an effective mode field diameter that is about three times larger in hollow core optical fibers (e.g., 30 $\mu$m) than in solid core optical fibers (e.g., 10 $\mu$m). Accordingly, mode field adaption is necessary when connecting hollow core optical fibers to solid core optical fibers. Known ways of providing this mode field adaption involve mode field conversion using spliced-on solid core fibers with intermediate mode properties at each hollow core to solid core optical fiber interface. However, splicing fiber-based mode field converters onto each optical fiber that must be converted adds substantially to the cost and complexity of using hollow core optical fiber.

Thus, there is a need in the fiber optic industry for improved methods and devices for operatively coupling optical signals between hollow core optical fibers and solid core optical fibers.

**Summary**

In an aspect of the disclosure, a mode field adapter is disclosed. The mode field adapter includes a first port and a second port. The first port includes a first collimating lens having a first focal length, and is configured to receive a first optical fiber having a first mode field diameter. The second port includes a second collimating lens having a second focal length different from the first focal length, and is configured to receive a second optical fiber having a second mode field diameter different from the first mode field diameter. The first collimating lens is configured to receive a diverging optical beam from the first optical fiber, and generate an expanded optical beam therefrom. The second collimating lens is configured to receive at least a portion of the expanded optical beam, generate a first converging optical beam therefrom, and transmit the first converging optical beam into the second optical fiber.

In an embodiment of the disclosed mode field adapter, the first focal length and the second focal length may be selected so that a ratio of the first focal length to the second focal length is substantially the same as the ratio of the first mode field diameter to the second mode field diameter.

In another embodiment of the disclosed mode field adapter, the first optical fiber may include a first end face, the second optical fiber may include a second end face, the first port may be configured so that a distance between the first collimating lens and the first end face is substantially the same as the first focal length, and the second port may be configured so that the distance between the second collimating lens and the second end face is substantially the same as the second focal length.

In another embodiment of the disclosed mode field adapter, the mode field adapter may further include a plurality of filters configured to define an optical path for the expanded optical beam. The filters may define the optical path by each filter receiving the expanded optical beam, transmitting a predetermined portion of the expanded optical beam, and reflecting a remaining portion of the expanded optical beam along the optical path. In this embodiment, the second port may be one of a plurality of second ports each including a respective second collimating lens having the second focal length, the second optical fiber may be one of a plurality of second optical fibers each having the second mode field diameter different from the first mode field diameter, and the second collimating lens of each second port may be configured to receive the predetermined portion of the expanded optical beam transmitted from a respective filter, generate a respective first converging optical beam therefrom, and transmit the respective first converging optical beam into a respective second optical fiber of the plurality of second optical fibers.

In another embodiment of the disclosed mode field adapter, the mode field adapter may include an additional first port having another first collimating lens with the first focal length, and the first optical fiber may be one of a plurality of first optical fibers including another first optical fiber having the first mode field diameter. In addition, the plurality of filters may include a last filter that reflects the remaining portion of the expanded optical beam along the optical path after the expanded optical beam has been reflected by each of the other filters, and the first collimating lens of the additional first port may be configured to receive the remaining portion of the expanded optical beam reflected from the last filter, generate a second converging optical beam therefrom, and transmit the second converging optical beam into the other first optical fiber.

In another embodiment of the disclosed mode field adapter, the first optical fiber may be a hollow core optical fiber, and the second optical fiber may be a solid core optical fiber.

In another aspect of the disclosure, a fiber optic network is disclosed. The fiber optic network includes a first hollow core optical fiber having the first mode field diameter, and a plurality of mode field adapters. Each of the mode field adapters includes the first port configured to receive the first hollow core optical fiber and having the first collimating lens, the plurality of filters configured to define the optical path for the expanded optical beam, and the plurality of second ports each configured to receive the solid core optical fiber having the second mode field diameter different from the first mode field diameter. The first collimating lens has the first focal length, and is configured to receive the diverging optical beam from the first hollow core optical fiber as well as generate an expanded optical beam therefrom. The plurality of filters defines the optical path for the expanded optical beam by each filter receiving the expanded optical beam, transmitting the predetermined portion of the expanded optical beam, and reflecting the remaining portion of the expanded optical beam along the optical path. The second collimating lens of each second port has the second focal length different from the first focal length, and is configured to receive the predetermined portion of the expanded optical beam from the respective filter of the plurality of filters, generate the first converging optical beam therefrom, and transmit the first converging optical beam into the solid core optical fiber. In the fiber optic network, the first port of a first mode field adapter of the plurality of mode field adapters is operatively coupled to the first port of a second mode field adapter of the plurality of mode field adapters by the first hollow core optical fiber.

In an embodiment of the disclosed fiber optic network, one or more second ports of the first mode field adapter may be operatively coupled to a central baseband unit by a respective solid core optical fiber of a first plurality of solid core optical fibers, each of one or more second ports of the second mode field adapter may be operatively coupled to a respective remote radio head at a first cell site by a respective solid core optical fiber of a second plurality of solid core optical fibers, and each of the one or more second ports of the first mode field adapter and each of the one or more second ports of the second mode field adapter may be selected so that the central baseband unit is operatively coupled to each of the one or more remote radio heads at the first cell site.

In another embodiment of the disclosed fiber optic network, the second mode field adapter may include another first port including another first collimating lens having the first focal length, and the plurality of filters may include the last filter that reflects the remaining portion of the expanded optical beam along the optical path after the expanded optical beam has been reflected by each of the other filters. In addition, the other first collimating lens may be configured to receive the remaining portion of the expanded optical beam reflected from the last filter, generate the second converging optical beam therefrom, and transmit the second converging optical beam into a first end of a second hollow core optical fiber.

In another embodiment of the disclosed fiber optic network, the plurality of mode field adapters may include a third mode field adapter, and the second hollow core optical fiber may have a second end operatively coupled to the first port of the third mode field adapter. Additionally, each of one or more second ports of the third mode field adapter may be operatively coupled to a respective remote radio head at a second cell site by a respective solid core optical fiber of a third plurality of solid core optical fibers, and each of the one or more second ports of the first mode field adapter and each of the one or more second ports of the third mode field adapter may be selected so that the central baseband unit is operatively coupled to each of the one or more remote radio heads at the second cell site.

In another embodiment of the disclosed fiber optic network, the first focal length and the second focal length may be selected so that the ratio of the first focal length to the second focal length is substantially the same as the ratio of the first mode field diameter to the second mode field diameter.

In another embodiment of the disclosed fiber optic network, the first hollow core optical fiber may include the first end face, the solid core optical fiber may include the second end face, the first port may be configured so that the distance between the first collimating lens and the first end face is substantially the same as the first focal length, and each second port of the plurality of second ports may be configured so that the distance between the second collimating lens and the second end face is substantially the same as the second focal length.

In another aspect of the disclosure, a method of coupling an optical beam between the first optical fiber having the first mode field diameter and the second optical fiber having the second mode field diameter different from the first mode field diameter is disclosed. The method includes receiving, by the first collimating lens having the first focal length, the diverging optical beam from the first optical fiber, and generating, by the first collimating lens, the expanded optical beam from the diverging optical beam. The method further includes receiving, by the second collimating lens having the second focal length different from the first focal length, at least the portion of the expanded optical beam, generating, by the second collimating lens, the first converging optical beam from the at least the portion of the expanded optical beam, and transmitting the first converging optical beam into the second optical fiber.

In an embodiment of the disclosed method, the method may further include selecting the first focal length and the second focal length so that the ratio of the first focal length to the second focal length is substantially the same as the ratio of the first mode field diameter to the second mode field diameter.

In another embodiment of the disclosed method, the method may further include positioning each of the first collimating lens and the first optical fiber so that the distance between the first collimating lens and the first end face of the first optical fiber is substantially the same as the first focal length, and positioning each of the second collimating lens and the second optical fiber so that the distance between the second collimating lens and the second end face of the second optical fiber is substantially the same as the second focal length.

In another embodiment of the disclosed method, the second collimating lens may be one of a plurality of second collimating lenses each having the second focal length, and the method may further include defining, by the plurality of filters, the optical path for the expanded optical beam by, at each filter of the plurality of filters, receiving the expanded optical beam, transmitting the predetermined portion of the expanded optical beam, and reflecting the remaining portion of the expanded optical beam along the optical path. The method may further include, at each second collimating lens of the plurality of second collimating lenses, receiving the predetermined portion of the expanded optical beam transmitted from a respective filter, generating the respective first converging optical beam therefrom, and transmitting the respective first converging optical beam into the respective second optical fiber of the plurality of second optical fibers.

In another embodiment of the disclosed method, the method may further include, at another first collimating lens having the first focal length, receiving the remaining portion of the expanded optical beam reflected from the last filter of the plurality of filters, generating the second converging optical beam therefrom, and transmitting the second converging optical beam into the other first optical fiber.

In another embodiment of the disclosed method, the first optical fiber may be a hollow core optical fiber, and the second optical fiber may be a solid core optical fiber.

## Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.

Fig. 1 is a diagrammatic view of an exemplary mode field adapter.
Fig. 2 is a diagrammatic view of another exemplary mode field diameter adapter that includes a plurality of filters configured to provide wavelength division multiplexing between a plurality of ports.
Fig. 3 is a diagrammatic view of the mode field adapter of Fig. 2 showing additional details of the adapter.

## Detailed Description

Various embodiments will be further clarified by examples in the description below. Embodiments described below leverage the optical properties of micro-optics collimators to perform mode field diameter adaption, e.g., between hollow core and solid core optical fibers. For example, existing collimators in multiplexing devices may be adapted to provide mode field conversion, thereby reducing fiber optic network complexity and cost as compared to conventional fiber optic networks that rely on fiber-based mode field adapters.

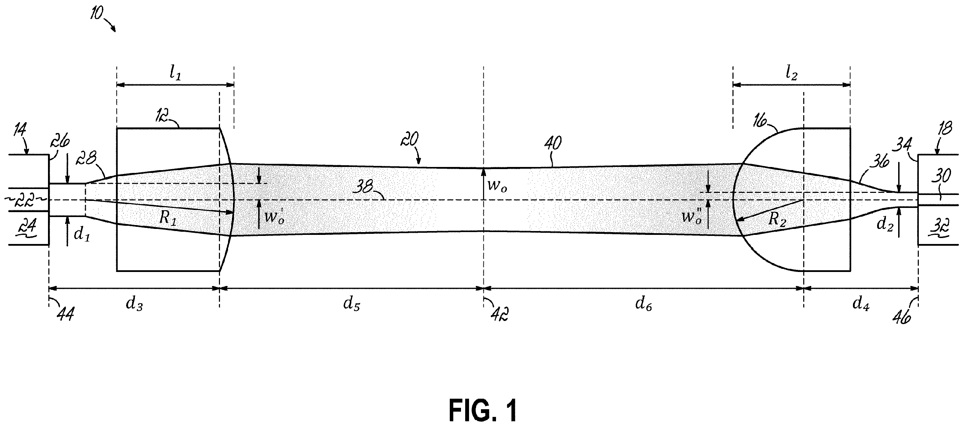

Fig. 1 depicts a mode field adapter 10 including a collimating lens 12 operatively coupled to a hollow core optical fiber 14 and another collimating lens 16 operatively coupled to a solid core optical fiber 18. Each collimating lens 12, 16 is configured to optically couple light between its respective optical fiber 14, 18 and an expanded optical beam 20 having the characteristics of a free-space Gaussian beam. The hollow core optical fiber 14 includes a hollow core 22 surrounded by a cladding 24, and an end face 26 from which a diverging optical beam 28 may be transmitted. The solid core optical fiber 18 includes a solid core 30 surrounded by a cladding 32, and an end face 34 into which a converging optical beam 36 may be transmitted.

For purposes of clarity, the optical beams 28, 36 may be described herein with respect to light that is propagating in a particular direction, e.g., from left to right. Hence the above use of the terms "diverging" with respect to optical beam 28 and "converging" with respect to optical beam 36. However, it should be understood that the mode field adapter 10 functions symmetrically for light propagating in either direction. Accordingly, the terms "diverging" and "converging" may be applied to optical beams 28, 36 interchangeably based on the direction of propagation.

The expanded optical beam 20 includes a beam axis 38 (or "z-axis") along which the width of the expanded optical beam 20 varies. An outer surface 40 of the expanded optical beam 20 may be defined as the point at which the intensity of the expanded optical beam 20 has dropped to $1/e^2$ of its on-axis value. The narrowest point of the expanded optical beam 20 is referred to as a beam waist 42. The beam waist 42 is coincident with the location of a focal plane (e.g., at z = 0) of the expanded optical beam 20. The radius w(z) of the expanded optical beam 20 increases with distance from the beam waist 42 according to the following hyperbolic expression:

$$w(z) = w_0 \sqrt{1 + \left(\frac{z}{z_R}\right)^2} \quad Eqn.\, 1$$

where $w_0$ is the radius of the expanded optical beam 20 at z = 0, and $z_R$ is a parameter known as the "Raleigh range". The Raleigh range is provided by:

$$z_R = \frac{\pi \times n}{\lambda} \times w_0^2 \quad Eqn.\, 2$$

where $\lambda$ is the free-space wavelength of the light comprising the expanded optical beam 20, and $n$ is the index of refraction of the medium through which the expanded optical beam 20 is propagating, e.g., $n = 1$ for free space propagation. The characteristics of a Gaussian beam for a given wavelength $\lambda$ and optical medium can be completely defined by the waist radius $w_0$ since all the other characteristics of the Gaussian beam are related to the waist radius $w_0$. The expanded optical beam 20 may have a waist radius $w_0$ of sufficient size so that the radius w(z) does not vary substantially within the mode field adapter 10, e.g., so that w(z) is not greater than $1.20 \times w_0$.

Light propagating through each optical fiber 14, 18 is confined by the dielectric properties of the core 22, 30 and cladding 24, 32. When either optical beam 28, 36 emerges from its respective optical fiber 14, 18, the light is no longer confined, and begins to diverge according to the laws of diffraction. In some embodiments, the fiber-facing surface of each collimating lens 12, 16 may be angled relative to the face of its respective optical fiber 14, 18 (e.g., by eight degrees) to avoid any portion of optical beams 28, 36 reflected back from the planar face of the collimating lens 12, 16 from entering the optical fibers 14, 18. However, for simplicity, Fig. 1 depicts the planar faces of each collimating lens 12, 16 and the face of each optical fiber 14, 18 as being parallel.

When emitted from a single mode optical fiber, an optical beam typically has a cross sectional intensity profile that is sufficiently similar to a Gaussian function to allow the optical beam to be treated as a Gaussian beam. Thus, each optical beam 28, 36 may be modeled as a Gaussian beam having a beam waist 44, 46 located at the end face 26, 34 of the optical fiber 14, 18. Each beam waist 44, 46 has a waist radius $w_0'$, $w_0''$ equal to half the mode field diameter $d_1$, $d_2$ of the optical fiber 14, 18. Stated another way, each beam waist 44, 46 has a waist diameter ($2 \times w_1$, $2 \times w_2$) that is matched to the mode field diameter $d_1$, $d_2$ of its optical fiber 14, 18 in both size and position. The mode field diameter $d_1$, $d_2$ may be determined for each optical fiber 14, 18 through direct measurement or computationally, or may be obtained from the manufacturer.

The cross-sectional profile of the light propagating through the optical fiber 14, 18 typically extends into its cladding 24, 32 such that the mode field diameter $d_1$, $d_2$ is greater than the diameter of the core 22, 30. The propagation model is generally bi-directional, so maximum coupling efficiency into the optical fiber 14, 18 may be achieved by providing an axially-aligned incident Gaussian beam having a beam waist that is both coincident with the end face 26, 34 of the optical fiber 14, 18 and has a waist diameter $2 \times w_0'$ or $2 \times w_0''$ the same as the mode field diameter $d_1$, $d_2$. The waist diameter of a converging optical beam 28, 36 may be considered as being matched to the mode field diameter $d_1$, $d_2$ of the optical fiber 14, 18 if the size and position of the beam waist of the converging optical beam 28, 36 is such that at least 80% of the light incident on the end face of the optical fiber 14, 18 is transmitted into the optical fiber 14, 18.

Each collimating lens 12, 16 may have a respective length $l_1$, $l_2$ and radius of curvature of $R_1$, $R_2$, and may be made from a material having a refractive index of $n_1$, $n_2$ greater than air. These physical properties may collectively define a focal length $f_1$, $f_2$ of the lens. Each collimating lens 12, 16 may be located at an "object distance" $d_3$, $d_4$ from the end face 26, 34 of its respective optical fiber 14, 18 to operatively couple the optical beams 28, 36. In alternative embodiments, other types of lenses than those depicted (e.g., gradient index lenses) may be used. In these embodiments the focal length of the lenses may depend on properties other than a radius of curvature.

The waist radius $w_0'$, $w_0''$ of an optical beam emitted from the optical fibers 14, 18, the object distance $d_3$, $d_4$, and the focal length $f_1$, $f_2$ of the collimating lens 12, 16 may cause the beam waist 42 of the expanded optical beam 20 to be an "image distance" $d_5$, $d_6$ from the collimating lens 12, 16. Thus, the term "image distance" generally refers to the distance between the collimating lens 12, 16 and the beam waist 42 of the expanded optical beam 20 emitted therefrom, and the term "object distance" generally refers to the distance between the collimating lens 12, 16 and the end face of the optical fiber 14, 18. In cases where the collimating lens 12, 16 is unable to focus the diverging optical beam 28, 36 (e.g., because the object distance is less than the focal length), the image distance $d_5$, $d_6$ may be negative, indicating the beam waist of the expanded optical beam 20 is located at a virtual focal plane on the optical fiber side of the collimating lens 12, 16. The focal length of a lens 12, 16 may be considered as substantially same as the object distance $d_3$, $d_4$ if the waist 42 of the expanded optical beam 20 formed by the lens in question is located between the collimating lenses 12, 16.

For a diverging optical beam 28, 36 having a given waist radius $w_0'$, $w_0''$, the waist radius $w_0$ and location of the beam waist 42 of expanded optical beam 20 can be set through selection of one or more of the focal length $f_1$, $f_2$ of the collimating lens 12, 16, and the object distance $d_3$, $d_4$ between the collimating lens 12, 16 and the end face 26, 34 of the optical fiber 14, 18. The waist radius $w_0$ of the expanded optical beam 20 as a function of the mode field diameter $d_1$, $d_2$ for each collimating lens 12, 16 can be calculated by:

$$w_0 = \frac{d_{MF} \times f_L}{2 \times \sqrt{(f_L - d_{OD})^2 + z_R{}^2}} \quad Eqn.\,3$$

where $d_{MF}$ is the mode field diameter (e.g., $d_1$ or $d_2$), $f_L$ is the focal length of the collimating lens 12, 16, $d_{OD}$ is the object distance (e.g., $d_3$ or $d_4$), and $z_R$ is the Raleigh range of the diverging optical beam 28, 36.

One or both of the object distance $d_3$, $d_4$ and focal length $f_1$, $f_2$ that produces a desired waist radius $w_0$ of the expanded optical beam 20 may be determined numerically, empirically, or by using a known relationship between the waist radius $w_0$ of the expanded optical beam 20 and the waist radiuses $w_0'$, $w_0''$ the of optical beams 28, 36 being collimated, e.g., by using Eqn. 3. In an embodiment, the ratio of the focal lengths $f_1$, $f_2$ of collimating lenses 12, 16 may be set equal the ratio of the mode field diameters $d_1$, $d_2$. That is, the focal lengths of the collimating lenses 12, 16 may be selected so that:

$$\frac{f_1}{f_2} = \frac{d_1}{d_2} \quad Eqn.\,4$$

The above relationship between the focal lengths $f_1$, $f_2$ of the collimating lenses 12, 16 and the mode field diameters $d_1$, $d_2$ of the optical fibers 14, 18 may provide optimal optical coupling between the optical fibers 14, 18 and an expanded optical beam 20 having the same waist radius $w_0$ for each direction of propagation. The ratio of focal lengths $f_1$, $f_2$ may be considered as being substantially the same as the ratio of mode field diameters $d_1$, $d_2$ if, for a given expanded optical beam 20, the focal lengths $f_1$, $f_2$ are such that the waist diameter of each converging optical beam 28, 36 matches the mode field diameter of the optical fiber 14, 18 into which the converging optical beam 28, 36 is being transmitted.

The waist radius $w_0$, focal lengths $f_1$, $f_2$, object distances $d_3$, $d_4$, and other design parameters of the mode field adapter 10 may be selected to provide the desired characteristics (e.g., waist radiuses $w_0'$, $w_0''$ having respective sizes and positions that match the mode field diameters $d_1$, $d_2$ of their optical fibers 14, 18) based on Eqns. 3 and 4, or computationally using numerical methods. Focal length ratios thus depend on the relative size of the mode field diameters being adapted. Exemplary ranges of focal length ratios $R$ may include $1.5 \le R \le 6.0$, $2.0 \le R \le 4.5$, $2.5 \le R \le 3.6$, with a typical ratio of focal lengths $f_1$, $f_2$ being $R = 3.0$.

Radio access networks in 5G systems typically include one or more centralized baseband units, with each baseband unit being connected to a plurality of geographically dispersed remote radio heads by a fronthaul network. Operators deploying 5G radio networks need to deploy both higher bandwidth channels and more total channels due to the larger number of cell sites as compared to previous generation wireless data networks. One way of providing additional bandwidth in the fronthaul network is by using Wavelength Division Multiplexing (WDM) to connect each of the numerous remote radio units supporting these smaller cell sites to their respective baseband units. WDM allows operators to quickly increase the number of channels without having to lay out new and expensive fiber infrastructure. Moreover, because hollow core optical fiber tends to cost more than solid core optical fiber, use of hollow core optical fibers may add an additional cost incentive to keep fiber counts low in fronthaul networks. Thus, fronthaul network deployments including hollow core optical fiber are likely to also include WDM.

A typical wavelength division multiplexed link in a fronthaul network may include one or more backend WDM devices proximate to the centralized baseband unit, and at least one frontend WDM device at each of the cell sites served by the centralized baseband unit. The backend WDM device may receive optical signals having different wavelengths from the centralized baseband unit over a plurality solid core optical fibers. The backend WDM device may then multiplex these signals onto a single fronthaul optical fiber for transport out to one or more cell sites each having one or more remote radio heads.

At each cell site, a frontend WDM device receives the multiplexed signal from the fronthaul optical fiber, and separates one or more downlink optical signals from the multiplexed signal. These separated signals are operatively coupled onto individual solid core optical fibers that connect the frontend WDM device to the remote radio heads. The WDM devices also work in the other direction by multiplexing optical signals received from the remote radio heads onto the fronthaul optical fiber, and separating these signals from the multiplexed signal at the centralized baseband unit. As noted in the background, replacing a solid core fronthaul optical fiber with a hollow core fronthaul optical fiber may significantly increase the geographic area that can be served by a single centralized baseband unit. However, this substitution requires mode field adaptation to avoid excessive loss of signal.

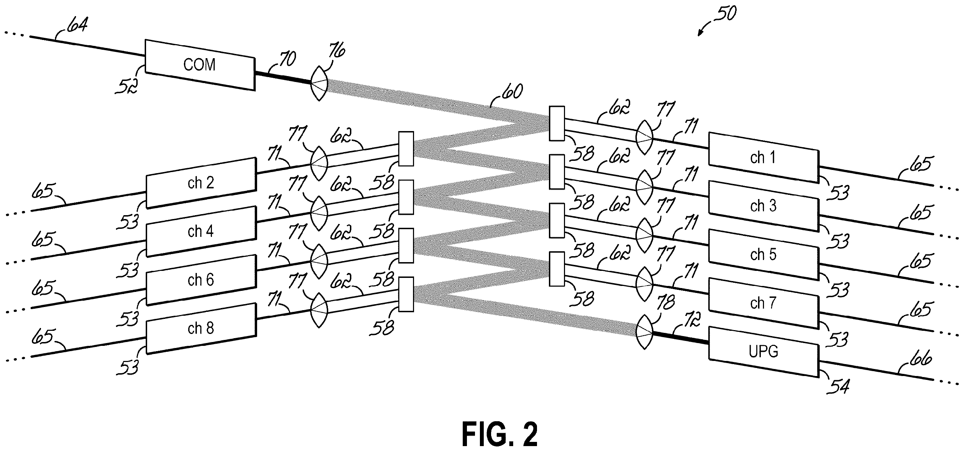

Fig. 2 depicts an exemplary multi-port mode field adapter 50 that facilitates the use of hollow core optical fibers in fronthaul and other optical networks by providing built in wavelength division multiplexing of optical signals. The mode field adapter 50 may include a common port 52, a plurality of channel ports 53, and an upgrade port 54, and is configured to provide mode field adaption between two or more of these ports. The mode field adapter 50 further includes a plurality of bandpass filters 58 that define an optical path for an expanded optical beam 60. The expanded optical beam 60 may include different optical signals 62, i.e., $n$ optical signals 62 each having a different wavelength $\lambda_n$. Each port 52-54 may include or be configured to receive a respective optical fiber 64-66. Optical beams 70-72 received or emitted by each optical fiber 64-66 may be operatively coupled to a respective one of the optical beams 60-62 by a respective collimating lens 76-78.

Each filter 58 may include a passband that passes a range of wavelengths which includes a portion of the expanded optical beam 60 containing the wavelength $\lambda_n$ of a respective one of the optical signals 62. Each passband may exclude the remaining portion of the expanded optical beam 60 containing the wavelengths $\lambda_n$ of the other optical signals 62. Each filter 58 transmits the portion of the expanded optical beam 60 containing the optical signal 62 having the wavelength $\lambda_n$ that falls within its passband, and reflects the portion of the expanded optical beam 60 containing the optical signals 62 having wavelengths $\lambda_n$ that fall outside its passband.

By arranging the filters 58 sequentially from a first filter 58 to a last filter 58 in the optical path, each filter 58 can perform a demultiplexing operation by separating one of the optical signals 62 from the expanded optical beam 60 and providing the separated optical signal 62 to a respective collimating lens 77. In this configuration, each filter 58 can also perform a multiplexing operation by adding one of the optical signals 62 from the respective collimating lens to the expanded optical beam 60. Thus, the mode field adapter 50 is bi-directional, meaning that it can both split optical signals received from an optical fiber for distribution at the network location, and combine optical signals for transmission into the optical fiber at the network location. Thus, the mode field adapter 50 can be used as a multiplexer, demultiplexer, or both a multiplexer and demultiplexer.

A collimating lens 76-78 is used to focus and collimate the expanded optical beam 60 in the mode field adapter 50 each time the expanded optical beam 60 is operatively coupled to an optical fiber 64-66. By properly selecting the focal length of each collimating lens 76-78, the collimating lenses 76-78 may be configured to provide mode field conversion between any two optical beams 70-72. Thus, each port 52-54 of mode field adapter 50 may be selectively configured to receive a hollow core or a solid core optical fiber, for example.

In an embodiment, each of the optical fiber 64 operatively coupled to common port 52 and the optical fiber 66 operatively coupled to upgrade port 54 may be a hollow core fiber, and each of the optical fibers 65 operatively coupled to the channel ports 53 may be a solid core optical fiber. This configuration would enable hollow core optical fibers to be used on the portion of a fronthaul network connecting cell towers to the baseband unit, and solid core optical fibers to be used in the drop cables connecting the WDM device to the remote radio units without the need for seperate mode field converters. Advantageously, by eliminating the need to splice fiber-based mode field converters onto the ends of the optical fibers 64-66, the above described mode conversion feature significantly reduces the complexity and cost of hollow core fiber optic deployments in WDM optical networks. Furthermore, this concept can be extended to configure any multi-port WDM multiplexer with any mix of hollow core and solid core optical fibers.

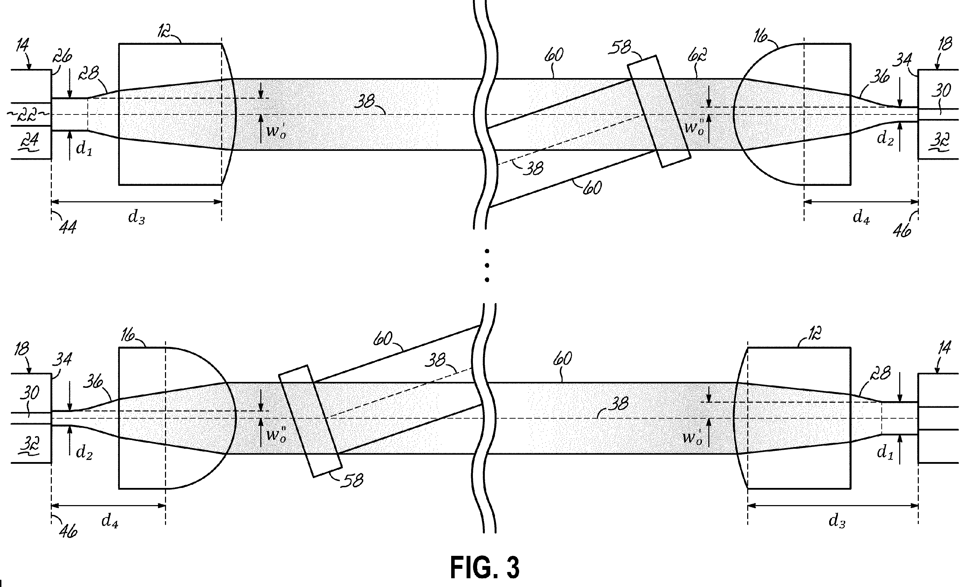

Fig. 3 depicts an embodiment of the mode field adapter 50 in which the optical fiber 64 associated with the common port 52 is the hollow core optical fiber 14 of Fig. 1, and the optical beam 28 includes the optical signals 62 of Fig. 2. Each of the optical fibers 71 associated with the channel ports 53 is depicted as being provided by the solid core optical fiber 18 of Fig. 1, and each optical beam 36 includes a respective one of the optical signals 62. The optical fiber 66 associated with the upgrade port 54 may also be provided by a hollow core optical fiber 14 such as depicted in Fig. 1, and carries an optical beam 28 including one or more optical signals 62 not associated with any of the channel ports 53 of the mode field adapter 50.

In accordance with Eqn. 3, a focal length ratio of 3/1 between the collimating lenses 12, 16 would be indicated for converting an exemplary hollow core optical fiber mode field diameter of 30 $\mu$m to an exemplary solid core optical fiber mode field diameter of 10 $\mu$m. This ratio of focal lengths could be provided, for example, by providing the hollow core collimating lenses 12 with a 3 mm radius of curvature, and providing the solid core collimating lenses 16 with a 1 mm radius of curvature. For collimating lenses 12, 16 having an index of refraction of about $n$ = 1.5, an object distance $d_3$ of about 6.3 mm, and an object distance $d_4$ of about 2.6 mm, this would result in a collimated expanded optical 60 beam having a diameter of about 400 $\mu$m between the collimating lenses 12, 16. This is a large enough beam width to provide low divergence propagation between inserted micro-optical components, such as WDM thin film filters. Thus, the mode field adapter 50 may be configured to receive and/or transmit a multiplexed optical beam from and/or to a hollow core optical fiber connected to the common port 52, and receive and/or transmit one or more individual WDM channels or sub-bands to and/or from ports 53 operatively coupled to solid core optical fibers.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The present disclosure in its broader aspects is therefore not limited to the specific details, representative apparatus and methods and illustrative examples shown and described. Accordingly, departures may be made from such details without departing from the scope of the present disclosure.

**Claims**

1. A mode field adapter, comprising:

   a first port that includes a first collimating lens having a first focal length and that is configured to receive a first optical fiber having a first mode field diameter; and
   a second port that includes a second collimating lens having a second focal length different from the first focal length and that is configured to receive a second optical fiber having a second mode field diameter different from the first mode field diameter,
   wherein the first collimating lens is configured to receive a diverging optical beam from the first optical fiber and generate an expanded optical beam therefrom, and
the second collimating lens is configured to receive at least a portion of the expanded optical beam, generate a first converging optical beam therefrom, and transmit the first converging optical beam into the second optical fiber.

2. The mode field adapter of claim 1, wherein the first focal length and the second focal length are selected so that a ratio of the first focal length to the second focal length is substantially the same as the ratio of the first mode field diameter to the second mode field diameter.

3. The mode field adapter of claim 1 or 2, wherein:

   the first optical fiber includes a first end face,
   the second optical fiber includes a second end face,
   the first port is configured so that a distance between the first collimating lens and the first end face is substantially the same as the first focal length, and
   the second port is configured so that the distance between the second collimating lens and the second end face is substantially the same as the second focal length.

4. The mode field adapter of any of claims 1-3, further comprising:

   a plurality of filters configured to define an optical path for the expanded optical beam by each filter receiving the expanded optical beam, transmitting a predetermined portion of the expanded optical beam, and reflecting a remaining portion of the expanded optical beam along the optical path, wherein
   the second port is one of a plurality of second ports each including a respective second collimating lens having the second focal length,
   the second optical fiber is one of a plurality of second optical fibers each having the second mode field diameter different from the first mode field diameter, and
   the second collimating lens of each second port is configured to receive the predetermined portion of the expanded optical beam transmitted from a respective filter, generate a respective first converging optical beam therefrom, and transmit the respective first converging optical beam into a respective second optical fiber of the plurality of second optical fibers.

5. The mode field adapter of claim 4, further comprising:

an additional first port including another first collimating lens having the first focal length, wherein

the first optical fiber is one of a plurality of first optical fibers including another first optical fiber having the first mode field diameter,

the plurality of filters includes a last filter that reflects the remaining portion of the expanded optical beam along the optical path after the expanded optical beam has been reflected by each of the other filters, and

the first collimating lens of the additional first port is configured to receive the remaining portion of the expanded optical beam reflected from the last filter, generate a second converging optical beam therefrom, and transmit the second converging optical beam into the other first optical fiber.

6. The mode field adapter of any of claims 1-5, wherein the first optical fiber is a hollow core optical fiber, and the second optical fiber is a solid core optical fiber.

7. A fiber optic network, comprising:

a first hollow core optical fiber having a first mode field diameter; and
a plurality of mode field adapters, each including:

a first port configured to receive the first hollow core optical fiber and including a first collimating lens, wherein the first collimating lens has a first focal length, and is configured to receive a diverging optical beam from the first hollow core optical fiber and generate an expanded optical beam therefrom,

a plurality of filters configured to define an optical path for the expanded optical beam by each filter receiving the expanded optical beam, transmitting a predetermined portion of the expanded optical beam, and reflecting a remaining portion of the expanded optical beam along the optical path,

a plurality of second ports each configured to receive a solid core optical fiber having a second mode field diameter different from the first mode field diameter and including a second collimating lens, wherein the second collimating lens has a second focal length different from the first focal length, and is configured to receive the predetermined portion of the expanded optical beam from a respective filter of the plurality of filters, generate a first converging optical beam therefrom, and transmit the first converging optical beam into the solid core optical fiber,

wherein the first port of a first mode field adapter of the plurality of mode field adapters is operatively coupled to the first port of a second mode field adapter of the plurality of mode field adapters by the first hollow core optical fiber.

8. The fiber optic network of claim 7, wherein:

one or more second ports of the first mode field adapter are operatively coupled to a central baseband unit by a respective solid core optical fiber of a first plurality of solid core optical fibers, each of one or more second ports of the second mode field adapter are operatively coupled to a respective remote radio head at a first cell site by a respective solid core optical fiber of a second plurality of solid core optical fibers, and each of the one or more second ports of the first mode field adapter and each of the one or more second ports of the second mode field adapter are selected so that the central baseband unit is operatively coupled to each of the one or more remote radio heads at the first cell site.

9. The fiber optic network of claim 8, wherein:

the second mode field adapter includes another first port including another first collimating lens having the first focal length,

the plurality of filters includes a last filter that reflects the remaining portion of the expanded optical beam along the optical path after the expanded optical beam has been reflected by each of the other filters,

the other first collimating lens is configured to receive the remaining portion of the expanded optical beam reflected from the last filter, generate a second converging optical beam therefrom, and transmit the second converging optical beam into a first end of a second hollow core optical fiber.

10. The fiber optic network of claim 9, wherein:

the plurality of mode field adapters includes a third mode field adapter, and the second hollow core optical fiber has a second end operatively coupled to the first port of the third mode field adapter,

each of one or more second ports of the third mode field adapter are operatively coupled to a respective remote radio head at a second cell site by a respective solid core optical fiber of a third plurality of solid core optical fibers, and each of the one or more second ports of the first mode field adapter and each of the one or more second ports of the third mode field adapter are selected so that the central baseband unit is operatively coupled to each of the one or more remote radio heads at the second cell site.

11. The fiber optic network of any of claims 7-10, wherein the first focal length and the second focal length are selected so that a ratio of the first focal length to the second focal length is substantially the same as the ratio of the first mode field diameter to the second mode field diameter.

12. The fiber optic network of any of claims 7-11, wherein:

the first hollow core optical fiber includes a first end face,
each solid core optical fiber includes a second end face,
the first port is configured so that a distance between the first collimating lens and the first end face is substantially the same as the first focal length, and
each second port of the plurality of second ports is configured so that the distance between the second collimating lens and the second end face is substantially the same as the second focal length.

13. A method of coupling an optical beam between a first optical fiber having a first mode field diameter and a second optical fiber having a second mode field diameter different from the first mode field diameter, comprising:

receiving, by a first collimating lens having a first focal length, a diverging optical beam from the first optical fiber;
generating, by the first collimating lens, an expanded optical beam from the diverging optical beam;
receiving, by a second collimating lens having a second focal length different from the first focal length, at least a portion of the expanded optical beam;
generating, by the second collimating lens, a first converging optical beam from the at least the portion of the expanded optical beam; and
transmitting the first converging optical beam into the second optical fiber.

14. The method of claim 13, further comprising:
selecting the first focal length and the second focal length so that a ratio of the first focal length to the second focal length is substantially the same as the ratio of the first mode field diameter to the second mode field diameter.

15. The method of claim 13 or 14, further comprising:

positioning each of the first collimating lens and the first optical fiber so that a distance between the first collimating lens and a first end face of the first optical fiber is substantially the same as the first focal length, and
positioning each of the second collimating lens and the second optical fiber so that the distance between the second collimating lens and a second end face of the second optical fiber is substantially the same as the second focal length.

**FIG. 1**

**FIG. 2**

EP 4 411 439 A1

**FIG. 3**

Europäisches
Patentamt

European
Patent Office

Office européen
des brevets

# EUROPEAN SEARCH REPORT

Application Number

EP 24 15 5954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/073707 A1 (INNO LASER TECH CORPORATION LIMITED [CN]) 16 April 2020 (2020-04-16) | 1-3, 13-15 | INV. G02B6/293 G02B6/32 |
| Y | * paragraphs [0045] - [0047], [0049]; figure 1 * | 4,5 | |
| X | WO 2019/117872 A1 (FORO ENERGY INC [US]) 20 June 2019 (2019-06-20) | 1,3,6, 13,15 | |
| Y | * paragraphs [0040] - [0041], [0080]; figure 1 * | 4,5,7-9, 12 | |
| Y | US 2023/010259 A1 (TANAKA MASATO [JP] ET AL) 12 January 2023 (2023-01-12) * paragraphs [0055], [0056], [0060], [0062], [0067], [0134]; figures 2,26 * | 4,5,7-9, 12 | |

TECHNICAL FIELDS
SEARCHED       (IPC)

G02B

The present search report has been drawn up for all claims

| Place of search | Date of completion of the search | Examiner |
|---|---|---|
| Berlin | 23 May 2024 | Verdrager, Véronique |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................................

& : member of the same patent family, corresponding
    document

## ANNEX TO THE EUROPEAN SEARCH REPORT
## ON EUROPEAN PATENT APPLICATION NO.

EP 24 15 5954

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2024

| Patent document cited in search report | | Publication date | Patent family member(s) | | Publication date |
|---|---|---|---|---|---|
| WO 2020073707 | A1 | 16-04-2020 | CN | 108919428 A | 30-11-2018 |
| | | | WO | 2020073707 A1 | 16-04-2020 |
| WO 2019117872 | A1 | 20-06-2019 | BR | 112019027385 A2 | 07-07-2020 |
| | | | WO | 2019117872 A1 | 20-06-2019 |
| US 2023010259 | A1 | 12-01-2023 | CN | 115542466 A | 30-12-2022 |
| | | | JP | 2023006057 A | 18-01-2023 |
| | | | US | 2023010259 A1 | 12-01-2023 |

EPO FORM P0459

For more details about this annex : see Official Journal of the European Patent Office, No. 12/82

**REFERENCES CITED IN THE DESCRIPTION**

**Patent documents cited in the description**

• US 16471823